**Europäisches Patentamt**

**European Patent Office**

**Office européen des brevets**

(19)

(11) Publication number: **0 010 559**
**B1**

(12) # EUROPEAN PATENT SPECIFICATION

(45) Date of publication of patent specification: **22.12.82**

(51) Int. Cl.³: **F 16 B 2/06, F 16 L 3/12**

(21) Application number: **78300574.7**

(22) Date of filing: **01.11.78**

(54) Pipe and cable clamps.

(43) Date of publication of application:
**14.05.80 Bulletin 80/10**

(45) Publication of the grant of the patent:
**22.12.82 Bulletin 82/51**

(84) Designated Contracting States:
**BE CH DE FR LU NL SE**

(56) References cited:
**GB - A - 548 846**
**GB - A - 759 179**
**GB - A - 815 606**
**US - A - 1 383 058**

**BICC Publication No. 667G pages 13 and 14**

(73) Proprietor: **BICC Limited**
**21, Bloomsbury Street**
**London, WC1B 3QN (GB)**

(72) Inventor: **Delhees, Peter**
**63 Beauclair Drive**
**Liverpool 15 (GB)**
Inventor: **Conlan, John Philip**
**Pear Tree House Brockway, Tattenhall**
**Chester Cheshire (GB)**

(74) Representative: **Poole, Michael John et al,**
**BICC Limited Patents Department 38 Wood Lane**
**London, W12 7DX (GB)**

Courier Press, Leamington Spa, England.

## Pipe and cable clamps

This invention relates to clamps for securing pipes, cables and the like, and since the type of article to be gripped will not normally influence the structure of the clamp only cables will be expressed referred to hereinafter. More particularly it relates to clamps of the kind including a flexible member that can be wrapped round a cable and secured and supported by means of end-fittings integral with the flexible member or permanently attached to it shaped to provide a pair of faying surfaces (one on each end fitting) through which a screw will extend and which may engage one another when the clamp is wrapped around a cable. One such clamp was sold by the Applicant company (through its subsidiary BICC Components Limited) under the trade mark "Telcleat" and is disclosed in BICC Publication No. 667G. As the flexible member must be strong enough to give adequate support, it has no useful extensibility, and only very limited range-taking ability can be obtained by allowing the faying surfaces to remain slightly spaced apart, and that at the expense of reduced rigidity of mounting — A large number of sizes must therefore be made if all cable sizes are to be catered for.

BICC Publication No. 667G also discloses a hook cleat made of two separate rigid parts which clamp the cable by sliding on faying surfaces through which the fixing screw passes and which are inclined to the screw. Since the parts are rigid, this cleat also has almost no range-taking capacity and must be made in many sizes.

British Patents 759179 and 815606 disclose another type of clamp in which, in order to accommodate a range of circumferences, the relative positions of the faying surfaces differ by displacement in the plane normal to the cable axis dependent on the magnitude of the circumference within that range, the faying surfaces extending substantially from end to end of each end-fitting in the direction of said displacement. In this clamp the faying surfaces are generally normal to the axis of the fixing screw, but formed with ribs that define a plurality of predetermined clamping positions. In using this type of clamp, it is necessary to decide which of the available clamping positions is appropriate to the cable(s) or other article(s) to be secured and then to pre-tension the flexible member to the extent necessary to enable the clamp to take up that particular clamping position; often both these steps are difficult to accomplish.

In accordance with the present invention, the faying surfaces are continuously inclined to the screw in the direction such that tightening of the screw tends to displace the end-fittings relative to one another in the direction such that the clamp becomes more tightly engaged around the cable.

Cables with a circumference somewhat larger than the range referred to can be accommodated by allowing the formation of a gap between the faying surfaces, as in the known clamps in which the end-fittings touch in one fixed relative position only.

Preferably the faying surfaces are planar, and when the clamp is wrapped around a circular cable (with a circumference within the range of the clamp) they will always be non-radial with respect to the cable to a substantial degree. Preferably they approximate to a plane tangential to such a circular cable. The angle between the faying surfaces and the local radius will vary over the area of the surfaces, but is preferably in the region of 45°.

To allow for the variation in relative position of the faying surfaces it will normally be necessary for at least one of the apertures for the fixing screw to be wider, in the direction of the length of the flexible member, than the diameter of the screw to be used. Exceptionally in some of the cases in which only discrete cable sizes are to be accommodated a row of separate holes could be used.

Preferably the end-fitting that has the screw-hole that is elongate or otherwise wider than the screw is the one on which the faying surface inclines towards the other end-fitting in a direction away from the cable; the other end-fitting preferably has a round hole to position the screw accurately.

In most cases the end-fittings will also provide abutment surfaces for engagement with a support surface and the screw head; these are preferably planar and preferably parallel to one another when the faying surfaces are in contact with one another.

Each of the end-fittings may also provide a support surface for engagement with the cable; when the faying surfaces are substantially tangential to the cable, one of these may be a continuation of one of the faying surfaces.

The faying surfaces, the abutment surfaces and the support surfaces may each be a real surface (that is a surface bounding the solid material of the end-fittings) but in some cases they may alternatively be virtual surfaces defined by one or more upstanding ribs and/or edges and/or one or more local projections.

Usually the clamp will be moulded in one piece from flexible but resilient material, for example polyethylene, and in this respect a number of possibilities arise. It may for example be moulded with the flexible strap in a planar configuration, which considerably simplifies the moulding process, especially if ribs or other gripping formations are to be provided on the strap. Alternatively, it may be moulded with at least part of the strap in an arcuate form, approximately the form it will have when the clamp is in use, thereby simplifying installation.

In some cases it may be possible to achieve a beneficial compromise between these two approaches by initially moulding in a planar configuration and subsequently bending to arcuate form and stabilising in that form by heat-treating the strap at a temperature high enough to release stresses but not high enough to risk loss of shape.

The invention will be further described, by way of example, with reference to the drawings in which:

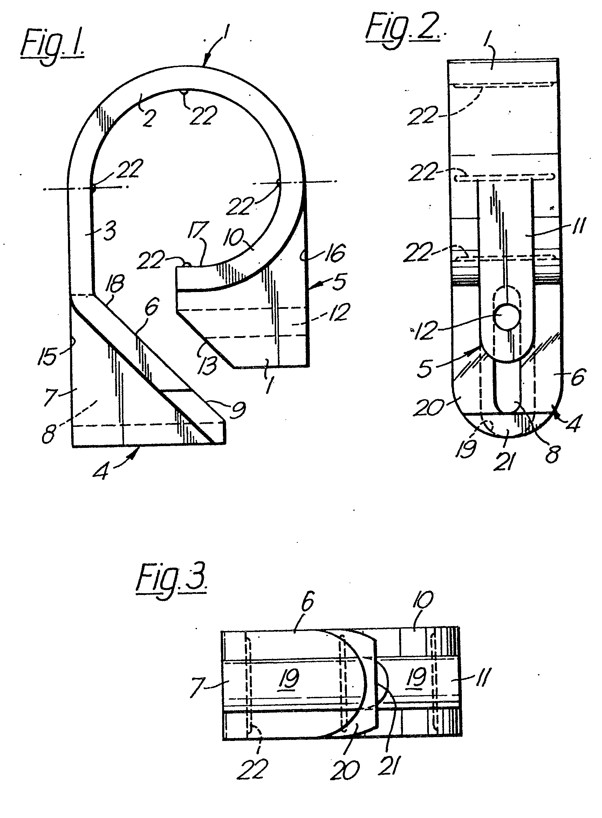

*Figures 1 to 3* are mutually perpendicular views of one form of clamp in accordance with the invention shown in its "as-moulded" condition;

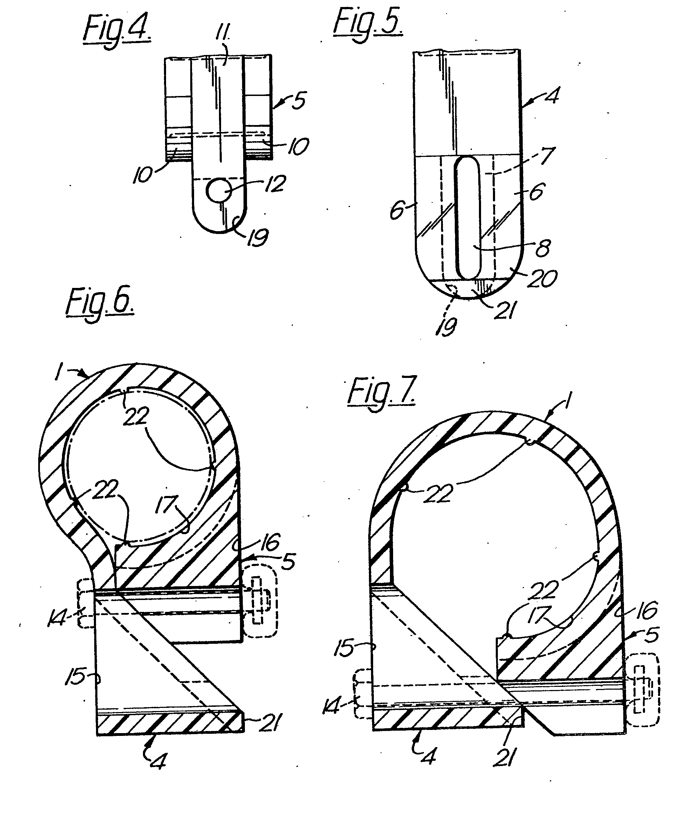

*Figures 4 to 5* are views, corresponding to Figure 2, showing the two end-fittings separately; and

*Figures 6 to 7* are views, corresponding to Figure 1, illustrating how the clamp accommodates different cable sizes.

The clamp comprises a strap 1 made up of semicircular part 2 and a flat part 3 which merge with one another, and both of which are flexible enough to be deformed by hand, and two end-fittings 4 and 5 which are relatively rigid.

The end-fitting 4 comprises an extension 6 of the straps inclined at an acute angle (say 45°) to the flat part 3 and merging into it and a generally triangular stiffening flange 7, with an elongate hole 8 passing through both of them, the clear face of the extension 6 providing a faying surface 9.

Somewhat similarly the other end-fitting 5 comprises a curved extension 10 of the strap which is distinguished from the semi-circular part 2 only by a stiffening flange 11, but in this case the hole 12 is round and lies wholly within the flange, and the faying surface 13 is formed on the flange. This faying surface is parallel to the first faying surface 9 or approximately so when the clamp is undeformed.

In use the clamp is sprung round the cable to be clamped and secured by a screw or other fastener 14 (Figures 6 and 7) inserted through the elongate hole 8 and passing through the round hole 12 to an appropriate support. Depending on the size of the cable, the faying surfaces 9 and 13 may come together in any of the range of positions bounded by those shown in Figures 6 and 7; or if the clamp is a little too large for this to happen, the clamp may tighten satisfactorily without the surfaces 9 and 13 touching one another.

This clamp has abutment surfaces 15, 16 and a support surface 17; the proximal part 18 of the abutment surface 9 acts as an additional support surface when the cable gripped is large.

In the particular design shown, the surfaces 19 of the flanges 7 and 11 that are parallel to the screw axis are rounded, for the sake of saving material, and the free end 20 of the strap extension 6 is also rounded, except that its extremity is truncated to provide a flat surface 21 perpendicular to the screw axis. Also ribs 22 are provided to enhance grip on some cables.

The clamp shown in the drawings, in a typical size, accommodates cables with a circumference in the range 123 to 160 mm, a range-taking capacity of approximately 37 mm on the cable circumference, compared with around 10 to 25 mm for a conventional clamp of the most nearly equivalent size, so considerably reducing stockholding requirements.

**Claims**

1. A support clamp including a flexible member (1) that can be wrapped round a cable and secured and supported by means of end-fittings (4, 5) integral with the flexible member or permanently attached to it, shaped to provide a pair of faying surfaces (9, 13) (one on each end-fitting) through which a screw (14) will extend and which engage one another when the clamp is wrapped round a cable, in which to accommodate a range of circumferences the relative positions of the faying surfaces (9, 13) differ by displacement in the plane normal to the cable axis dependent on the magnitude of the circumference within that range, the faying surfaces extending substantially from end to end of each end-fitting in the direction of said displacement characterised in that the faying surfaces are continuously inclined to the screw (14) in the direction such that tightening of the screw tends to displace the end-fittings relative to one another in the direction such that the clamp becomes more tightly engaged round the cable.

2. A clamp as claimed in Claim 1 characterised in that the faying surfaces are planar and non-radial to the cable to a substantial degree.

3. A clamp as claimed in Claim 2 characterised in that when the clamp is wrapped round a circular cable with a circumference in the said range the faying surfaces approximate to a plane tangential to such circular cable.

4. A clamp as claimed in Claim 3 characterised in that the angle between the faying surfaces and a local radius is in the region of 45°.

5. A clamp as claimed in any one of the preceding claims characterised in that one of the apertures for the fixing screw is elongate in the direction of the length of the flexible member.

6. A clamp as claimed in Claim 5 characterised in that the elongate hole is in the end-fitting in which the faying surface inclines towards the other end-fitting in a direction away from the cable.

7. A clamp as claimed in any one of Claims 1—4 characterised in that one of the end-fittings has a row of holes corresponding to the relative positions of the end-fittings when accommodating respective discrete cable sizes.

8. A clamp as claimed in any one of the preceding claims characterised in that the end-fittings also provide abutment surfaces for engagement with a support surface and a screw head.

9. A clamp as claimed in any one of the preceding claims characterised in that the end-fittings each also provide a support surface for engagement with the cable.

10. A clamp as claimed in Claim 9 characterised in that one of the support surfaces is a continuation of a faying surface that is substantially tangential to the cable.

## Revendications

1. Collier de support comprenant un élément flexible (1) qui peut être dispose autour d'un câble et être fixé et supporté au moyen de pièces d'extrémité (4, 5) faisant partie intégrante de l'élément flexible ou fixées de façon permanente à cet élément et profilées de manière à former une paire de surfaces d'affleurement (9, 13) (une sur chaque pièce d'extrémité) à travers lesquelles une vis (14) s'étend et qui portent l'une contre l'autre lorsque le collier est placé autour d'un câble, collier dans lequel pour se prêter à une gamme de circonférences les positions relatives des surfaces d'affleurement (9, 13) diffèrent par déplacement dans le plan perpendiculaire à l'axe du câble selon la grandeur de la circonférence à l'intérieur de cette gamme, les surfaces d'affleurement s'étendant sensiblement d'une extrémité à l'autre de chaque pièce d'extrémité dans la direction dudit déplacement, caractérisé par le fait que les surfaces d'affleurement sont inclinées de façon continue par rapport à la vis (14) dans une direction telle que le vissage de la vis a tendance à déplacer les pièces d'extrémité l'une par rapport à l'autre dans une direction telle que le collier se serre de plus en plus autour du câble.

2. Collier suivant la revendication 1, caractérisé par le fait que les surfaces d'affleurement sont planes et non radiales par rapport au câble dans un degré notable.

3. Collier suivant la revendication 2, caractérisé par le fait que lorsque le collier est placé autour d'un câble circulaire ayant une circonférence se situant dans ladite gamme, les surfaces d'affleurement se rapprochent d'un plan tangentiel à ce câble circulaire.

4. Collier suivant la revendication 3, caractérisé par le fait que l'angle entre les surfaces d'affleurement et un rayon local est de l'ordre de 45°.

5. Collier suivant l'une quelconque des revendications précédentes, caractérisé par le fait qu'une des ouvertures destinées à la vis de fixation a une forme allongée dans la direction de la longueur de l'élément flexible.

6. Collier suivant la revendication 5, caractérisé par le fait que le trou de forme allongée se trouve dans la pièce d'extrémité dans laquelle la surface d'affleurement s'incline vers l'autre pièce d'extrémité dans une direction opposée au câble.

7. Collier suivant l'une quelconque des revendications 1—4, caractérisé par le fait qu'une des pièces d'extrémité comporte une rangée de trous correspondant aux positions relatives des pièces d'extrémité quand le collier est adapté à des diamètres discrets respectifs de câbles.

8. Collier suivant l'une quelconque des revendications précédentes, caractérisé par le fait que les pièces d'extrémité forment également des surfaces d'appui destinées à venir en contact avec une surface de support et avec une tête de vis.

9. Collier suivant l'une quelconque des revendications précédentes, caractérisé par le fait que les pièces d'extrémité forment aussi chacune une surface de support destinée à venir en contact avec le câble.

10. Collier suivant la revendication 9, caractérisé par le fait qu'une des surfaces de support est un prolongement d'une surface d'affleurement qui est sensiblement tangentielle au câble.

## Patentansprüche

1. Halteklemme mit einem flexiblen Teil (1), das um ein Kabel herumgeführt und mittels Endanschlußstücken (4, 5) befestigt und gehaltert werden kann, die mit dem flexiblen Teil einstückig oder an diesem dauerhaft befestigt und so geformt sind, daß sie ein Paar Paßflächen (9, 13) (jeweils eine an jedem Endanschlußstück) bilden, durch die sich eine Schraube (14) erstreckt und die miteinander in Eingriff stehen, wenn die Klemme um ein Kabel herumgeführt ist, wobei zur Anpassung eines Bereichs von Umfangsmaßen die relativen Positionen der Paßflächen (9, 13) sich durch Verschieben der Ebene senkrecht zur Kabelachse in Abhängigkeit von der Größe des Umfangs innerhalb des Bereichs unterscheiden und wobei sich die Paßflächen im wesentlichen vom einen Ende bis zum anderen Ende jedes Endanschlußstücks in Richtung der Verschiebung erstrecken, dadurch gekennzeichnet, daß die Paßflächen zur Schraube (14) in der Richtung stufenlos geneigt sind, daß beim Anziehen der Schraube die Endanschlußstücke relativ zueinander in der Richtung verschoben werden, daß die Klemme das Kabel fester umgreift.

2. Klemme nach Anspruch 1, dadurch gekennzeichnet, daß die Paßflächen planar und zum Kabel in erheblichem Maße nicht radial sind.

3. Klemme nach Anspruch 2, dadurch gekennzeichnet, daß beim Herumführen der Klemme um ein kreisförmiges Kabel, dessen Umfang in dem genannten Bereich liegt, die Paßflächen eine zu diesem kreisförmigen Kabel tangentiale Ebene annähern.

4. Klemme nach Anspruch 3, dadurch gekennzeichnet, daß der Winkel zwischen den Paßflächen und einem lokalen Radius etwa 45° beträgt.

5. Klemme nach einem der vorstehenden Ansprüche, dadurch gekennzeichnet, daß die eine Bohrung für die Befestigungesschraube in Längsrichtung des flexiblen Teils als Langloch ausgebildet ist.

6. Klemme nach Anspruch 5, dadurch gekennzeichnet, daß das Langloch in dem Endanschlußstück ausgebildet ist, in dem sich die Paßfläche zum anderen Endanschlußstück vom Kabel weg neigt.

7. Klemme nach einem der Ansprüche 1 bis 4, dadurch gekennzeichnet, daß das eine Endanschlußstück eine Reihe von Bohrungen entsprechend den relativen Positionen der Endanschlußstücke für die Anpassung an entsprechend diskrete Kabelgrößen aufweist.

8. Klemme nach einem der vorstehenden Ansprüche, dadurch gekennzeichnet, daß die Endanschlußstücke Wilderlagerflächen zum Eingriff mit einer Halterfläche und einem Schraubenkopf aufweist.

9. Klemme nach einem der vorstehenden Ansprüche, dadurch gekennzeichnet, daß die Endanschlußstücke jeweils ebenfalls eine Haltefläche zum Eingriff mit dem Kabel aufweisen.

10. Klemme nach Anspruch 9, dadurch gekennzeichnet, daß die eine Haltefläche eine Verlängerung der Paßfläche ist, die im wesentlichen tangential zum Kabel verläuft.

Fig. 1.

Fig. 2.

Fig. 3.

0010559

Fig.4.

Fig.5.

Fig.6.

Fig.7.

2